# EUROPEAN PATENT APPLICATION

(11) **EP 3 366 570 A1**
(43) Date of publication of application: **29.08.2018**
(21) Application number: 17157489.0
(22) Date of filing: 22.02.2017
(51) Int. Cl.: B64C 3/56, B60F 5/02

(54) **WING FOLDING**

(71) Applicant: AeroMobil R&D, s. r. o., 82106 Bratislava-mestska cast Podunajske Biskupice (SK)
(72) Inventor: MACANDREW, Doug, 841 06 Bystrica (SK); ROOMS, Simon, 841 02 Bratislava (SK); URIK, Tomas, 908 41 Sastin-Straze (SK); DEREVJANIK, Simon, 060 01 Kezmarok (SK); GREN, Martin, 71300 Ostrava (CZ)
(74) Representative: Finnegan Europe LLP

(57) **Abstract**

An aircraft including a body and a pair of wings connected to the body by a mounting structure, the wings being movable between a first position in which the wings extend laterally from the body, and a second position in which the wings extend along the body from the mounting structure; wherein when the wings are in the second position, at least part of a first wing overlaps at least part of the second wing. The aircraft can comprise a convertible vehicle having a flight configuration and a road use configuration, the wings being positioned in the first position for flight configuration and in the second position for road use configuration; wherein the vehicle further comprises road wheels, wherein the road wheels are moveable between an extended position for use when the vehicle is in the road use configuration, and a retracted position for use when the vehicle is in the flight configuration. A method of operating the aircraft comprises placing the aircraft in transition configuration flight configuration with the wings in the first position; and moving the wings into the second position.

## Description

This invention relates to a folding wing system suitable for use on an aircraft. In one particular embodiment, the aircraft is a convertible vehicle having a flight configuration and a road use configuration. Such vehicles are commonly known as flying cars or roadable aircraft (hereafter "flying cars").

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/03240, WO 2016/057003, WO 2016/057004), and the Moller Skycar (http://moller.com/). The Terrafugia Transision and the Aeromobil both attempt to resolve the conflict between the need for suitable wing span and area in flight use, and the need for a more limited lateral width in road use, by providing a wing folding mechanism. The Terrafugia Transition folds the wing along axes running for an aft through the wing resulting in a large side area when folded. The system disclosed in WO 2013/03240 and WO 2016/057004 involves pivoting or swinging the wings back so that they lie along the upper part of the vehicle body. In order to reduce the folded width, the rear part of each wing folds back over the front part of the respective wing.

In both of these wing folding systems, it is necessary to provide a hinge that runs either along the chord of the wing, or along its span. In both cases, this adds to the complexity of the wing structure and its weight, and potentially affects its strength.

This invention is an attempt to address this problem.

A first aspect of the invention provides an aircraft, comprising a body; and a pair of wings connected to the body by a mounting structure, the wings being movable between a first position in which the wings extend laterally from the body, and a second position in which the wings extend along the body from the mounting structure; wherein when the wings are in the second position, at least part of a first wing overlaps at least part of the second wing. Overlapping the wings when folded reduces the width of the folded arrangement.

The wings can be pivotally connected to the mounting structure, the first and second wings having respective first and second pivot axes. In one such arrangement, the first pivot axis is inclined with respect to the second pivot axis such that the plane of rotation of the first wing extends over the plane of rotation of the second wing at least in the region occupied by the wings when in the second position.

The wings can extend rearwardly along the body from the mounting structure when in the second position.

The trailing edge portion of the first wing can overlap the trailing edge portion of the second wing when the wings are in the second position.

The mounting structure can be tiltable about a lateral axis with respect to the body. In such a case, when the wings are in the first position, the mounting structure can be titable to change the angle of attack of the wings.

The aircraft can further comprise a tail structure having two laterally spaced vertical fins, the wings in the second position being positioned between the vertical fins.

The aircraft can comprise a convertible vehicle having a flight configuration and a road use configuration, the wings being positioned in the first position for flight configuration and in the second position for road use configuration; wherein the vehicle further comprises road wheels, wherein the road wheels are moveable between an extended position for use when the vehicle is in the road use configuration, and a retracted position for use when the vehicle is in the flight configuration.

The vehicle can further have a transition configuration in which the wings are positioned in the first position and the road wheels are in an extended position.

One method of operating the convertible vehicle comprises placing the aircraft in the transition configuration flight configuration with the wings in the first position; and moving the wings into the second position.

The method can further comprise tilting the wings in a vertical direction as they move between the first and second positions, for example tilting the wings upwardly to clear upward projections on the vehicle body as the wings move from the first position, followed by tilting the wings downwardly as the wings move to the second position.

Further variations can be made within the scope of the invention.
Figure 1 shows a front perspective view of a flying car in a flight configuration;
Figure 2 shows a front perspective view of a flying car in a road use configuration;
Figure 3 shows a rear view of the flying car shown in Figure 2;
Figure 4 shows a plan view of the flying car shown in Figure 2;
Figure 5 shows detail of a wing mounting structure;
Figures 6A - 6C show various alignments of wing pivot axes; and
Figures 7A - 7E show various stages of wing folding.

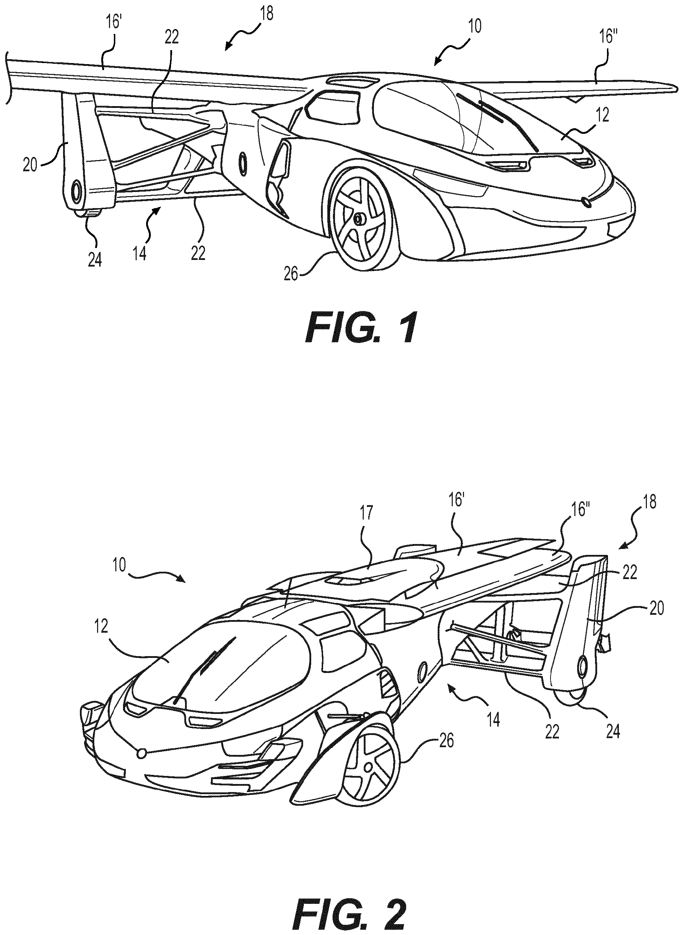

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16', 16" for providing lift and control (via ailerons, not shown) are mounted at the top of the body 10 immediately behind the crew compartment 12. The wings 16', 16" are connected to a mounting structure (not shown) positioned within the body 10 beneath a moveable cover 17. The wings 16', 16" can be moved between an extended position for flight use (Figure 1), and a folded position for road use (Figure 2). In the folded position, the wings lie along the top of the body 10, the long axes of the wings lying substantially parallel to the long axis of the body 10.

A tail structure 18 is located at the rear of the body 10, and includes vertical control surfaces 20 (fins and rudders), and horizontal control surfaces 22 (tail planes and elevators). Rear wheels 24 are provided at the lower ends of the fins 20.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use.

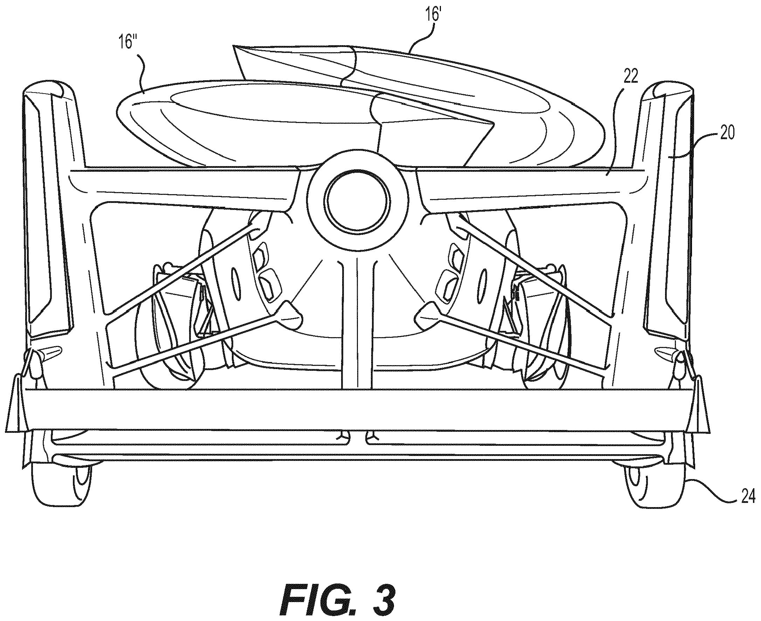

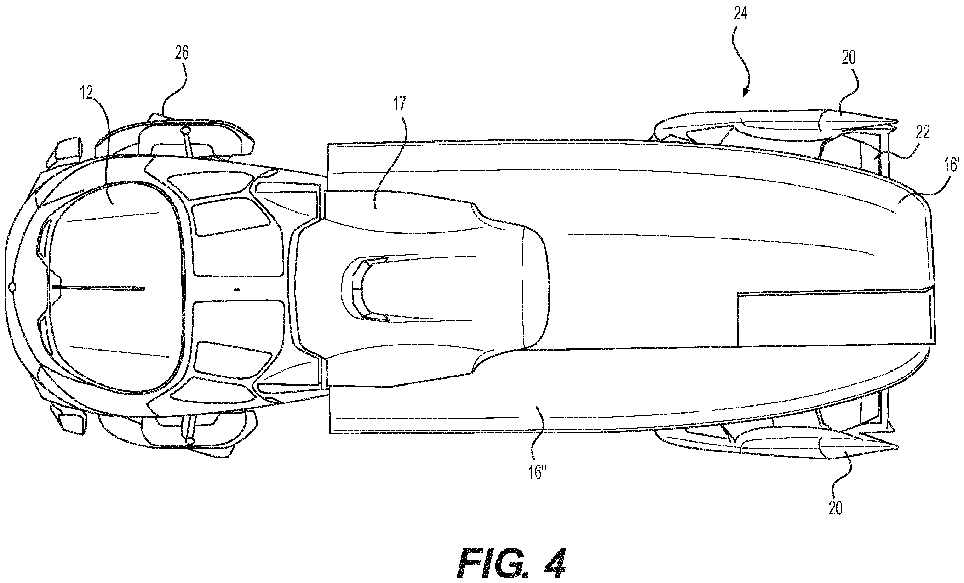

Figures 3 and 4 show further views of the vehicle in a road use configuration as also shown in Figure 2. When the wings 16', 16" are folded back to lie along the rear of the body 14, the trailing edge part of one wing 16' lies over the corresponding trailing edge part of the other wing 16". The selection of which wing lies on top is a matter of design choice. When folded in this way, the overall width of the folded wings lies within the lateral extremities of the vehicle as defined, for example, by the wheels when extended in the road use configuration. Furthermore, the width of the folded arrangement is such that the wings fit between the upper parts of the tail vertical control surfaces 20, and the wing tips are adjacent the tail horizontal control surfaces 22.

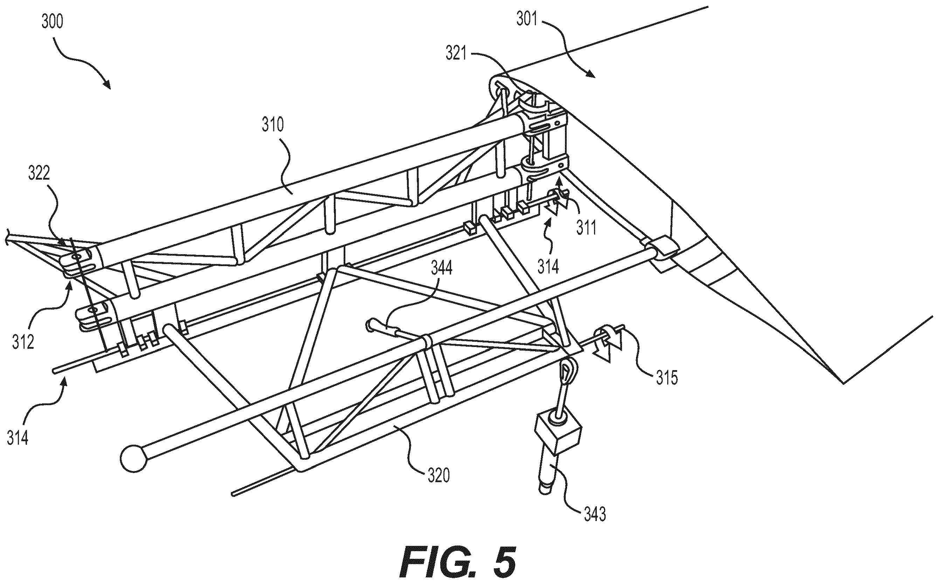

Figure 5 shows the wing mounting structure (center panel) that is similar to the center panel disclosed in WO 2016/057004 for use with wings that include hinges along the span so that the width of the folded wings can be reduced. The structure in Figure 5 comprises a front frame section 310 and a rear frame section 320. The front section has hinge mechanisms 311 and 312 at each side thereof by which wings 301 are mounted for rotation about a respective vertical axis 321, 322 under the control of associated actuators. The front and rear frame sections 310, 320 are mounted on the aircraft body (not shown) so as to be rotatable about a first horizontal (lateral) axis 314 under the control of an actuator 343.

In the position shown in Figure 5, the outer extremities of the rear frame section 320 engage in receiving formations on the wings 301 and resist pivoting about the hinge mechanisms 311, 312. The rear frame section 320 is rotatable about a second horizontal (lateral) axis 315 under the control of an actuator 344. By operating the actuator 344, the rear frame 320 can be rotated about the axis 315 such that the extremities disengage from the wings 301 and allow pivoting about the vertical axes 321, 322 of the hinge mechanisms 311, 312.

Operation of the actuator 343 tilts the frame sections 310, 320 about the axis 314. When the wings are in the extended position for flight, this has the effect of varying the angle of attack of the wings, which can be useful in take-off and landing. When the wings are being folded back, operation of the actuator 343 can raise the ends of the wings to clear body structures such as tail fins that might otherwise prevent the wings from folding fully back along the body.

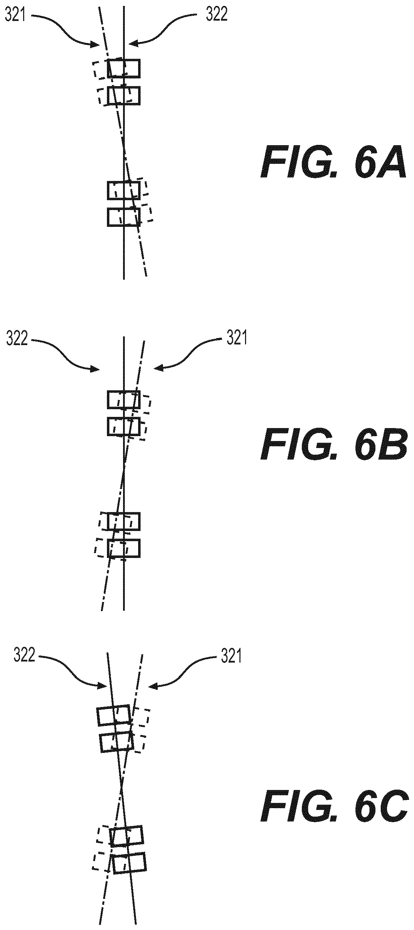

In the embodiment disclosed in WO 2016/057004, the vertical axes 321, 322 are substantially parallel such that the wings pivot in substantially the same plane. In the present case, in order to achieve a folding action in which one wing at least partially overlaps the other when folded, the axes 321, 322 about which the wings pivot or hinge are inclined with respect to each other. Figures 6A - 6C illustrate relative arrangements of the axes 321, 322 to achieve this effect. For example, one axis 322 can be substantially vertical while the other 321 is ahead of vertical (Figure 6A) or behind vertical (Figure 6B), or one axis 322 can be inclined ahead of vertical and the other 321 behind vertical (Figure 6C). It will be appreciated that which axis is vertical or inclined is a matter of choice. Also, the angles of inclination shown in Figures 6A - 6C are for illustrative purposes only, the actual angle being selected according to the dimensions of the wings and other body parts to be cleared when folding.

Other mechanisms can be provided to enable one wing to fold over the other. For example, rising or lifting hinges, or other cam surfaces on the hinges can be used, either alone or in addition to the mechanism described above, to obtain the necessary vertical movement of the end of the wing. The mounting frame can be modifies to allow each side to incline independently of the other to provide the same effect.

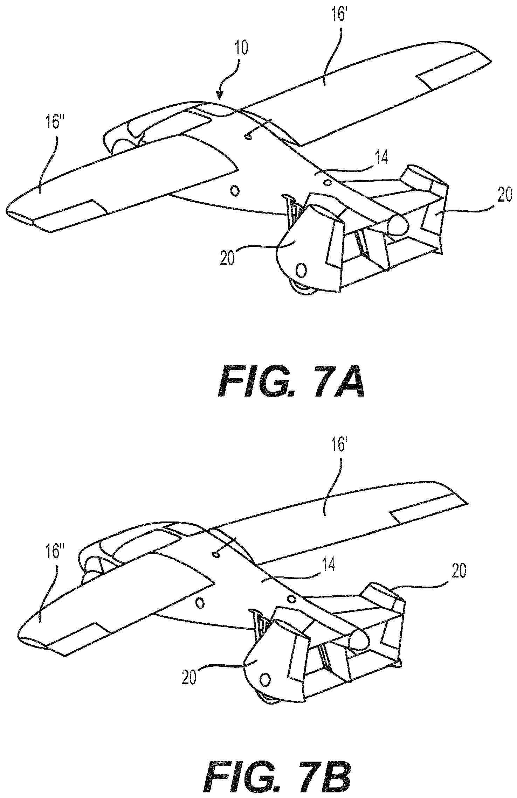

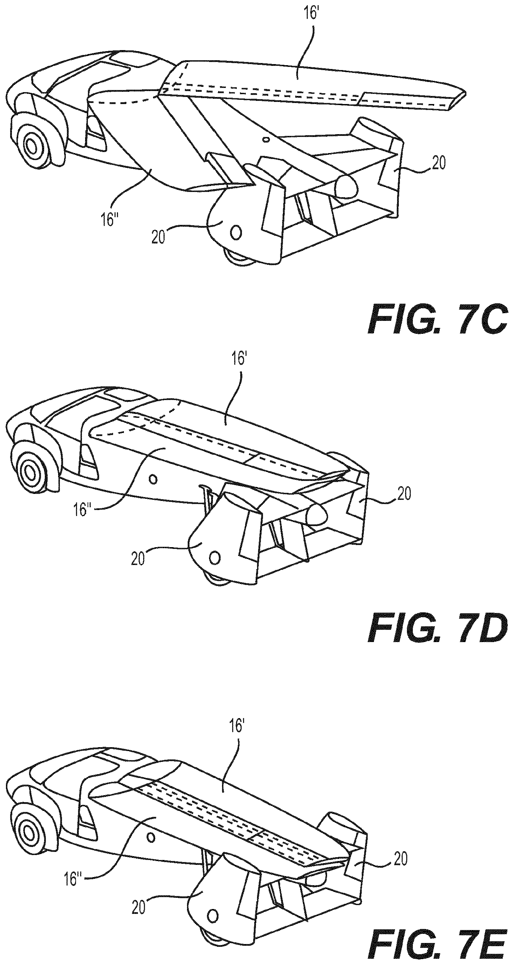

Figure 7A - 7E show various stages during a transition between a flight configuration and a road use configuration. At the start of the sequence, the vehicle is in a transition configuration with its wings 16', 16" extended, and the road wheels extended to support the vehicle on the ground.

The panel 17 (omitted from Figures 7A - 7E for clarity) is raised, and the wings 16', 16" rotated down at the leading edge, for example by extension of the actuator 343 to rotate the front and rear frame sections 310, 320 about the first horizontal axis 314 (Figure 5). A downward rotation of about 5 degrees may be appropriate although this may be varied depending on dimensions and configuration (Figure 7A). The rear frame section 320 is then rotated about the second horizontal axis 315 by the actuator 344 to disengage the extremities from the wings.

The wings 16', 16" may then be pivoted about the axes 321, 322 (Figure 7B). Because of the relative inclination of the axes 321, 322, in the mounting structure, the plane of rotation of wing 16' lies above the plane of rotation of wing 16" when above the rear part of the body 14 (Figure 7C). The downward rotation of the leading edge wings 16', 16" described above is such that when the wings 16', 16" are folded back, the wingtips will clear any upstanding structures such as vertical tail surfaces 20. Folding of the wings 16', 16" continues until the trailing edge of wing 16' lies over the trailing edge of wing 16" (Figure 7D). The wings 16', 16" are then lowered by operation of the actuator 343 to lower the from and rear frame sections 310, 320, the outer ends of the wings resting on supports (not shown) on the rear of the body 14. The cover 17 can be lowered back onto the wings 16', 16" at this point.

Extension of the wings 16', 16" from the road use configuration to flight configuration is essentially the reverse of this process. The cover 17 is raised and the outer ends of the wings raised by raising the front and rear frame sections 310, 320 using the actuator 343. The wings 16', 16" are then unfolded until they extend laterally from the body 10. The rear frame section 320 is then raised by the actuator 344 so that the extremities engage and lock the wings, and the front and rear frame sections 310, 320 lowered by actuator 343 and the cover 17 repositioned. The actuator 343 can also be used to adjust the angle of incidence/angle of attack of the extended wings when extended for take-off or landing.

Changes can be made while remaining within the scope of the invention.

## Claims

1. An aircraft, comprising:
a body; and
a pair of wings connected to the body by a mounting structure, the wings being movable between a first position in which the wings extend laterally from the body, and a second position in which the wings extend along the body from the mounting structure;
wherein
when the wings are in the second position, at least part of a first wing overlaps at least part of the second wing.

2. An aircraft as claimed in claim 1, wherein the wings are pivotally connected to the mounting structure, the first and second wings having respective first and second pivot axes.

3. An aircraft as claimed in claim 2, wherein the first pivot axis is inclined with respect to the second pivot axis such that the plane of rotation of the first wing extends over the plane of rotation of the second wing at least in the region occupied by the wings when in the second position.

4. An aircraft as claimed in any preceding claim, wherein the wings extend rearwardly along the body from the mounting structure when in the second position.

5. An aircraft as claimed in any preceding claim, wherein a trailing edge portion of the first wing overlaps a trailing edge portion of the second wing when the wings are in the second position.

6. An aircraft as claimed in any preceding claim, wherein the mounting structure is tiltable about a lateral axis with respect to the body.

7. An aircraft as claimed in claim 6, wherein, when the wings are in the first position, the mounting structure is titable to change the angle of attack of the wings.

8. An aircraft as claimed in any preceding claim, further comprising a tail structure having two laterally spaced vertical fins, the wings in the second position being positioned between the vertical fins.

9. An aircraft as claimed in any preceding claim comprising a convertible vehicle having a flight configuration and a road use configuration, the wings being positioned in the first position for flight configuration and in the second position for road use configuration; wherein the vehicle further comprises road wheels, wherein the road wheels are moveable between an extended position for use when the vehicle is in the road use configuration, and a retracted position for use when the vehicle is in the flight configuration.

10. An aircraft as claimed in claim 9, the vehicle further having a transition configuration in which the wings are positioned in the first position and the road wheels are in an extended position.

11. A method of operating an aircraft as claimed in claim 10, comprising
placing the aircraft in transition configuration flight configuration with the wings in the first position; and
moving the wings into the second position.

12. A method as claimed in claim 11, further comprising tilting the wings in a vertical direction as they move between the first and second positions.

13. A method as claimed in claim 12, wherein tilting the wings in a vertical direction comprises tilting the wings upwardly to clear upward projections on the vehicle body as the wings move from the first position, followed by tilting the wings downwardly as the wings move to the second position.
